# EUROPÄISCHE PATENTSCHRIFT

(11) **EP 2 015 518 B1**
(45) Veröffentlichungstag und Bekanntmachung des Hinweises auf die Patenterteilung: **04.08.2010**
(21) Anmeldenummer: 08104271.5
(22) Anmeldetag: 05.06.2008
(51) Int. Cl.: H04L 12/40, H04L 29/12

(54) **Slavegerät zur Verwendung in einer Reihenschaltung sowie Busanordnung mit Reihenschaltung in einem Subbussystem**
Slave device for use in a series connection and bus arrangement with series connection in a sub-bus system
Appareil esclave destiné à être utilisé dans une commutation en série et agencement de bus doté d'une commutation en série dans un système de sous-bus

(30) Priorität: 22.06.2007 DE 102007028926
(43) Veröffentlichungstag der Anmeldung: 14.01.2009
(73) Patentinhaber: SIEMENS AKTIENGESELLSCHAFT, 80333 München (DE)
(72) Erfinder: Bodensteiner, Andreas, 92727, Waldthurn (DE)

(56) Entgegenhaltungen:
- EP-A- 1 284 556
- DE-A1- 19 940 700
- US-A1- 2006 020 377
- G. LINNEMANN, K. REPPENNING: "Handbuch Elektrotechnik-Elektonik" 1983, DR. ALFRED HÜTHIG VERLAG , HEIDELSBERG , XP002494665 ISBN: 3-7785-0764-8 * Seite 26 - Seite 27 *

## Beschreibung

Die Erfindung betrifft ein Slavegerät zur Verwendung in einer von einem Mastergerät ausgehenden Reihenschaltung von Slavegeräten. Ein typischer Anwendungsfall für eine solche Reihenschaltung ist eine Busanordnung. Die Reihenschaltung definiert dann ein Subbussystem. Von dem Subbussystem ist lediglich das Mastergerät an einem Busknoten des Hauptbusses angeschlossen, und die Slavegeräte werden über das Mastergerät gesteuert. Interessant ist diese Art der Schaltung insbesondere für das KNX-Bussystem, für das ein modularer Aufbau bisher nicht bekannt ist. Problematisch für die Verwendung von Subbussen ist die Adressierung der Slaves. Bei bisherigen Master-Slave-Systemen ist an den einzelnen Geräten ein Dekodierschalter angeordnet, mit Hilfe dessen dem Gerät eine Adresse zugeordnet werden kann. Dies hat jedoch den Nachteil, dass eine Installateursperson Arbeitsaufwand hat. Wegen der Einbeziehung menschlicher Tätigkeit steigt auch die Fehlergefahr, insbesondere die einer Falschkodierung.

In der Druckschrift EP 1 284 556 A1 wird dazu ein Verfahren zur automatischen Initialisierung eines Bussystems offenbart, bei dem die Slavegeräte des Bussystems in einer Spannungsteilerschaltung angeordnet sind. Jedes Slavegerät greift in Abhängigkeit von seiner Position im Spannungsteiler einen unterschiedlichen Spannungswert ab. Über einen Analog-DigitalWandler wird in jedem Slavegerät der gemessene Spannungswert in einen digitalen Wert gewandelt, der als eindeutige Identifikationsnummer genutzt wird. Diese eindeutige Identifikationsnummer eines jedes Slavegeräts wird in der Weise in einem Adresszuordnungsverfahren genutzt, dass das Mastergerät des Bussystems über eine von allen Geräten gemeinsam genutzte Kommunikationsleitung eine Abfolge aller möglichen, von den Analog-Digital-Wandlern generierbaren digitalen Ausgabewerte überträgt und ein Slavegerät bei Übereinstimmung einer vom Mastergerät gesendeten Identifikationsnummer mit der vom Analog-Digital-Wandler des Slavegeräts gelieferten Identifikationsnummer eine Nachricht an das Mastergerät sendet. Dem Mastergerät stehen somit nach Durchführung des Zuordnungsverfahrens die Identifikationsnummern aller im Bussystem präsenten Slavegeräte zu Verfügung. Da die am Spannungsteiler abgreifbaren Teilspannungen mit der Zahl der am Bus angeschlossenen Geräte variieren, sind die von den Analog-Digital-Wandlern generierten Identifikationsnummern sowohl von der Lage eines Slavegeräts innerhalb der Reihenschaltung aus Slavegeräten als auch von der Gesamtzahl der vorhandenen Slavegeräte abhängig.

Ein in der Druckschrift US 2006/0020377 A1 offenbartes System zur Bremsenüberwachung weist eine Schaltungsanordnung zur automatischen Adressvergabe für Slavesysteme eines Busses auf, bei dem die Adresse eines Slavegeräts lediglich von der Position des Slavegeräts innerhalb der Busanordnung abhängt und die Zahl der im Bussystem nachgeschalteten Geräte keinen Einfluß mehr auf die automatisch ermittelte Adresse eines Slavegeräts hat. Dazu verfügt jedes Slavegerät über eine Spannungsteiler-Stufe, die mit den Spannungsteiler-Stufen der übrigen Busteilnehmer zu einem Spannungsteiler zusammengeschaltet wird. Jede Stufe der Spannungsteileranordnung wird durch einen Spannungsfolger und eine nachgeschaltete Diode realisiert. Da der Spannungsabfall über jeder Diode ca. 0,65 Volt beträgt, kann in einem Slavegerät anhand der Differenz zwischen der an der Spannungsteiler-Stufe gemessenen Teilspannung und der Versorgungsspannung für den Spannungsteiler ermittelt werden, wie viele Dioden und damit wie viele Slavegeräte sich zwischen dem Mastergerät und der Spannungsteiler-Stufe befinden. Die so ermittelte Position im Bus kann zur Generierung einer eindeutigen Adresse verwendet werden. Aufgrund der Temperaturabhängigkeit des Spannungsabfalls über einer Diode sind für dieses Verfahren noch stabilisierende Zusatzschaltungen in Form von Stromquellen nötig. Der Schaltungsaufwand zur Erzeugung einer unveränderlichen Teilspannung gemäß der Lehre der D2 ist somit vergleichsweise hoch.

Daher ist es wünschenswert, für Slavegeräte in einem Bus eine Schaltung zur automatischen Adresszuweisung, durch die in Abhängigkeit von der Position des Slavegeräts im Bus immer derselbe digitale Adresswert geliefert wird und die unabhängig von der Anzahl der einem Slavegerät nachgeschalteten Gerät arbeitet, derart weiterzubilden, dass die Schaltung zur Adresszuweisung auch dann immer denselben digitalen Adresswert liefert, wenn der Spannungsteiler für die Generierung der Teilspannungen mit einfachen Widerständen realisiert wird und die Teilspannungen deshalb in Abhängigkeit von der Gesamtzahl der angeschlossenen Slavegeräte in gewissen Grenzen schwanken.

Die Aufgabe wird durch ein Slavegerät mit den Merkmalen gemäß Patentanspruch 1 gelöst. Zur Erfindung gehört auch eine Reihenschaltung gemäß Patentanspruch 5 und eine Busanordnung gemäß Patentanspruch 6.

Das erfindungsgemäße Slavegerät hat somit einen Potentialeingang zum Empfangen eines Potentials von einem in der Reihenschaltung vorausgehenden Gerät und einen Potentialausgang zum Weiterleiten eines Potentials an ein in der Reihenschaltung nachfolgendes Gerät. Zwischen Potentialeingang und Potentialausgang ist ein Widerstand angeordnet, es soll also eine Spannung in dem Slavegerät zwischen Potentialeingang und Potentialausgang abfallen. Das Slavegerät weist Mittel zum Wandeln eines am Slavegerät anliegenden Potentials in eine digitale Adresse auf. Mittel zum Steuern des Slavegeräts sind dazu ausgelegt, die so erzeugte digitale Adresse für das Slavegerät zu verwenden.

Bei Verwendung nur der erfindungsgemäßen Slavegeräte in einer Reihenschaltung zusammen mit einem Mastergerät, das ein erstes Potential für den Potentialeingang des ersten Slavegeräts zur Verfügung stellt, legt somit jedes Slavegerät seine Adresse selbst fest. Eine menschliche Tätigkeit zur Festlegung der Adresse ist somit nicht mehr erforderlich, so dass auch damit verbundene Fehler nicht mehr auftreten.

Die Mittel zum Wandeln eines analogen Wertes in digitale Größen umfassen eine Mehrzahl von Komparatoren. Zu jedem der Komparatoren ist ein anderer Schwellwert festgelegt, mit dem das anliegende Potential in dem jeweiligen Komparator verglichen wird. Es können weitere Komparatoren vorgesehen sein, die einen durch einen Spannungsteiler heruntergeteilten Ausgang eines ersten Komparators mit einem solchen heruntergeteilten Ausgang eines zweiten Spannungskomparators vergleichen, um so aus zwei digitalen Größen eine einzige digitale Größe zu machen.

Die den Komparatoren zugeordneten Schwellwerte sind durch geeignete Wahl von Widerständen festgelegt. Hierbei soll gewährleistet sein, dass die Mittel zum Wandeln eine für die Position des Slavegeräts in einer Reihenschaltung mit gleichartigen Slavegeräten eindeutige Adresse ausgeben, die zudem von der Zahl der in der Reihenschaltung nachfolgenden Slavegeräten unabhängig ist. Damit ist eine Flexibilität bei der Gestaltung des Subbussystems gegeben, ohne dass sich an der Adressierung etwas ändert. Das Subbussystem kann insbesondere durch Hinzufügung oder Wegnahme eines oder mehrerer Slavegeräte in bzw. aus der Reihenschaltung umgewandelt werden, ohne dass sich die Adressen der unverändert gebliebenen Slavegeräte ändern müssen.

Das Potential, das in die digitale Adresse gewandelt wird, wird beispielsweise am Potentialeingang abgegriffen. Damit an den einzelnen Slavegeräten eine definierte Spannung im Rahmen eines vorgegebenen Wertebereichs abfällt, ist vorgesehen, dass der Potentialausgang in dem Slavegerät jeweils über einen Widerstand mit Masse verbunden ist.

Die Adresse liegt bevorzugt an einem Pin bzw. Pinsystem an, wobei die Mittel zum Steuern, zum Beispiel ein geeigneter Mikroprozessor, mit den Pins verbunden sind. An jedem Pin ist ein Bit für die Adresse durch die Mittel zum Steuern abgreifbar. Die Mittel zum Steuern des Slavegeräts teilen die Adresse dann an Mittel zum Steuern des Mastergeräts mit, so dass die Slavegeräte nachfolgend von den Mastergeräten unter dieser Adresse angesprochen werden können.

Zur Erfindung gehört auch eine Reihenschaltung aus einem Mastergerät mit einem oder mehreren erfindungsgemäßen Slavegeräten. Mastergerät und Slavegerät sind insbesondere als Aktoren ausgestaltbar.

Solche Aktoren finden ihre Verwendung in einer Busanordnung, zum Beispiel einer KNX-Busanordnung. Somit ist auch die erfindungsgemäße Reihenschaltung in einer solchen Busanordnung verwendbar, wobei lediglich das Mastergerät an einem Bus anzuschließen ist und die übrige Reihenschaltung ein Subbussystem bildet. Zusätzlich zu Leitungen, über die jeweilige Potentiale von den Potentialausgängen des Master- bzw. der Slavegeräte zum jeweils nachfolgenden Slavegerät weitergeleitet werden, kann der Subbus, also die Reihenschaltung in der Busanordnung, eine gesonderte Leitung für die Subbuskommunikation aufweisen. Typischerweise wird man hierzu eine I²C-Leitung nach dem bekannten Standard zur Verbindung von I²C-Bausteinen in den Slavegeräten bzw. dem Mastergerät verwenden. Nachfolgend wird eine bevorzugte Ausführungsform der Erfindung unter Bezug auf die Zeichnung beschrieben, in der
FIG 1 ein Subbussystem entsprechend der vorliegenden Erfindung schematisch darstellt und
FIG 2 einen Teil der Verschaltung in den Slaves des Subbussystems aus FIG 1 veranschaulicht.

Im Rahmen einer herkömmlichen Reihenschaltung sind einem Master Slaves nachgeordnet. Vorgesehen ist hierbei eine maximale Zahl von vier Slaves, die mit Slave 1, Slave 2, Slave 3, Slave 4 bezeichnet sind. Die Reihenschaltung kann auch weniger Slaves als vier umfassen.

Über eine Leitung "SpV" werden die einzelnen Slaves von dem Master mit Spannung versorgt, und über eine Leitung "GND" liegen die Slaves jeweils an Masse.

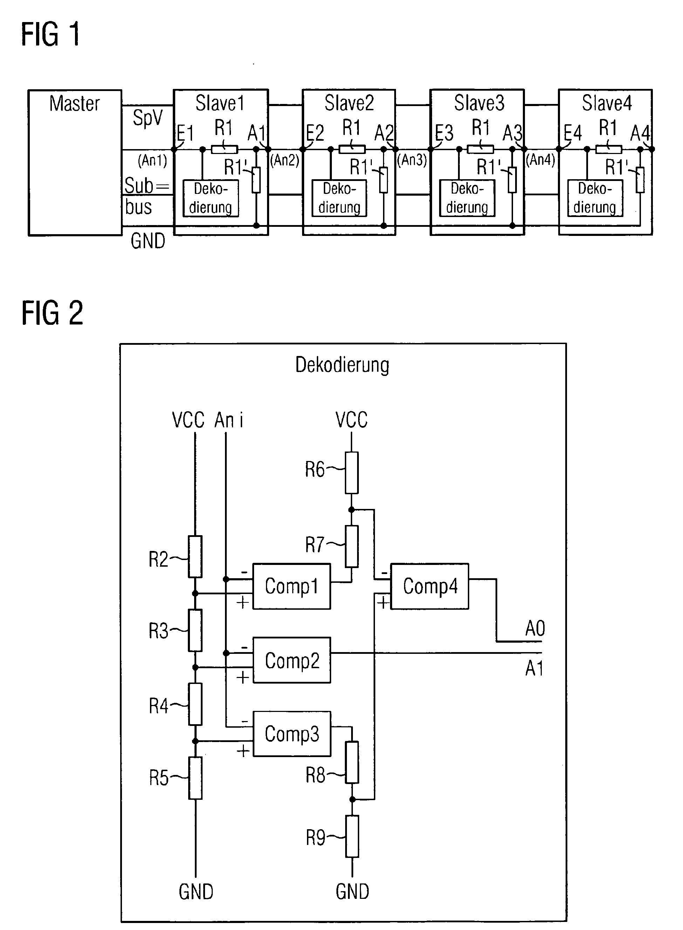

Die Slaves 1 bis 4 sind alle gleichartig gebaut und weisen einen Potentialeingang Ei und einen Potentialausgang Ai auf, welche über einen Widerstand R1 miteinander verbunden sind. Der Potentialausgang Ai ist über einen Widerstand R1', der bevorzugt einen Widerstandswert hat, der das Vierfache des Widerstandswerts von R1 ist, mit Masse verbunden. Jeder Slave umfasst ferner eine Dekodierungsschaltung, die jeweils die Eingangsspannung Ani, welche am Potentialeingang Ei anliegt, abgreift. Diese Dekodierungsschaltung ist im Ganzen in FIG 2 gezeigt. Die Eingangsspannung Ani ist jeweils mit dem negativen Eingang von drei Komparatoren Comp1, Comp2 und Comp3 verbunden. Jeder Slave stellt intern die Spannung VCC bereit. Diese wird über eine Kette von Widerständen R2, R3, R4 und R5 sukzessive gegenüber Masse heruntergeteilt. Abgriffe jeweils hinter den Widerständen R2, R3 und R4 werden jeweils mit dem positiven Eingang von Comp1, Comp2 und Comp3 verbunden. Ist R1'=4*R1, und gibt der Master seine von ihm selbst erzeugte Spannung VCC an den Slave An1 weiter, so beträgt An2=0,65*VCC, An3=0,45*VCC und An4=0,3*VCC.

Es hat sich als geeignet erwiesen, mit Hilfe der Widerstände R2 bis R5 Schwellwerte genau in der Mitte zwischen diesen Spannungswerten Ani festzulegen, so dass beispielsweise am positiven Eingang von Comp1 0,85*VCC anliegt, am positiven Eingang von Comp2 0,55*VCC und am positiven Eingang von Comp3 0,37*VCC. Bei gleichem Aufbau der Dekodierungsschaltung bei allen Slaves ergibt sich in der Gesamtschau an den Ausgängen von Comp1, Comp2, Comp3, für die Slaves 1 bis 4 jeweils ein anderes Ergebnis, nämlich entsprechend folgender Tabelle:

| Slave | Comp1 | Comp2 | Comp3 |
|---|---|---|---|
| Slave1 | 1 | 1 | 1 |
| Slave2 | 0 | 1 | 1 |
| Slave3 | 0 | 0 | 1 |
| Slave4 | 0 | 0 | 0 |

In der Tabelle bedeutet die "1", dass der Ausgang des jeweiligen Komparators logisch hoch ist, und die "0", dass der Ausgang des jeweiligen Komparators logisch niedrig ist.

Grundsätzlich würde es genügen, wenn die Ausgänge von Comp1, Comp2 und Comp3 direkt digital die Adresse liefern. Man bräuchte dann für jeden Komparator ein Adressbit, insgesamt also drei Adressbits. Für vier Slaves sind aber nicht mehr als zwei Adressbits erforderlich. Diese Einsparung kann unter Verwendung eines vierten Komparators Comp4 erfolgen. Es kann eine logische Schaltung realisiert werden.

In der Praxis wird der Ausgang von Comp1, wenn er null Volt beträgt, durch einen Spannungsteiler von R aus den Widerständen R6 und R7, deren Widerstandswerte ein Verhältnis von vier zu eins haben, auf einen Wert von 0,2*VCC angehoben. Der Ausgang des Komparators Comp3 wird, wenn er logisch hoch ist, also auf VCC steht, durch einen Spannungsteiler aus den Widerständen R8 und R9 mit gleichem Widerstandswert auf ca. 0,5*VCC gesenkt. Das zwischen den Widerständen R6 und R7 anliegende Potential wird mit dem negativen Eingang des Komparators Comp4 verbunden, und das Potential zwischen den Widerständen R8 und R9 liegt am positiven Eingang von Comp4 an. Man kann nun den Ausgang von Comp4 als A0 definieren, und der Ausgang von Comp2 bleibt als A1 unverändert. Die Schaltung liefert dann folgende Wahrheitstabelle:

| Slave | A0 | A1 |
|---|---|---|
| Slave1 | 0 | 1 |
| Slave2 | 1 | 1 |
| Slave3 | 1 | 0 |
| Slave4 | 0 | 0 |

Man erkennt, dass die Gesamtheit von A0 und A1 bei jedem der vier Slaves 1 bis 4 verschieden ist, so dass die Ausgänge A1 und A0 direkt als Adressbits verwendet werden können. Beispielsweise können die Ausgänge A0 und A1 direkt mit den Adressierungsports von entsprechenden logischen Bausteinen (z. B. I²C-Baustein) der Slaves verbunden werden, wobei über eine in FIG 1 gezeigte Subbusleitung auf diese zugegriffen werden kann. Die Ausgänge A0 und A1 können auch einem Mikrokontroller in den einzelnen Slaves zur Verfügung gestellt werden, der daraus die Adresse des jeweiligen Slaves ableiten kann, an einen entsprechenden Mikrokontroller des Masters weiterleiten kann und so ermöglicht, dass der Master den jeweiligen Slave unter seiner anhand der Dekodierungsschaltung von FIG 2 ermittelten Adresse anspricht.

Wird R1' geeignet groß gewählt, zum Beispiel wie vorliegend genannt als R1'=4*R1, so schwanken die Eingangsspannungen Ani der einzelnen Slaves wenig mit der Gesamtzahl der Slaves, d. h. dass sich Ani innerhalb einer vorbestimmten Bandbreite bewegt, unabhängig wie viele Slaves dem Slave nachgeschaltet sind. Durch geeignete Wahl der Widerstände R2 bis R5 kann dieser Bandbreite Rechnung getragen werden, und die Werte von A0 und A1 ändern sich nicht bei einer Änderung der Zahl der nachgeschalteten Slaves. Die Adressierung bleibt damit unabhängig von der Anzahl der Slaves, insbesondere wenn diese wie vorliegend auf eine Maximalanzahl beschränkt ist.

Durch die Dekodierungsschaltung aus FIG 2 wird die Adresse der Slaves automatisch festgelegt. Bei Anbau weiterer Slaves wird diesem Slave eine andere Adresse zugeordnet. Der Installateur der Reihenschaltung ist somit von der Aufgabe entlastet, die Adressen der Slaves festzulegen.

Durch die Erfindung wird es im Rahmen eines KNX-Busses ermöglicht, ein Aktorsystem mit Mastern und Slaves 1 bis 4 modular aufzubauen, d. h. ein Subbussystem zu bauen, von dem lediglich der Master an einem Knoten des Haupt-KNX-Busses angeschlossen ist. Dadurch kann die Gesamtzahl der Aktoren erhöht werden, wenn die Zahl der Busknoten wie üblich begrenzt ist (z. B. auf 256 Busknoten).

### Bezugszeichenliste

- Ani, An1, An2, An3, An4: Potential
- Ai, A1, A2, A3, A4: Potentialausgang
- Comp1, Comp2, Comp3, Comp4: Komparatoren
- Ei, E1, E2, E3, E4: Potentialeingang
- GND: Masse
- R1, R1', R2, R3, R4, R5, R6, R7, R8, R9: Widerstand
- VCC, SpV: Spannung

## Patentansprüche

1. Slavegerät zur Verwendung in einer von einem Mastergerät ausgehenden Reihenschaltung von Slavegeräten, mit einem Potentialeingang (E1, E2, E3, E4) zum Empfangen eines Potentials (An1, An2, An3, An4) von einem in der Reihenschaltung vorausgehenden Gerät und einem Potentialausgang (A1, A2, A3, A4) zum Weiterleiten eines Potentials an ein in der Reihenschaltung nachfolgendes Gerät, wobei zwischen Potentialeingang (E1, E2, E3, E4) und Potentialausgang (A1, A2, A3, A4) ein Widerstand (R1) angeordnet ist, wobei das Slavegerät Mittel zum Wandeln eines am Slavegerät anliegenden Potentials (Ani) in eine digitale Adresse umfasst,
**dadurch gekennzeichnet, dass** die Mittel zum Wandeln eine Mehrzahl von Komparatoren (Comp1, Comp2, Comp3, Comp4) zum Vergleichen des anliegenden Potentials (Ani) mit einem für jeden Komparator (Comp1, Comp2, Comp3, Comp4) anderen Schwellwert umfassen,
wobei die Schwellwerte bei den Komparatoren (Comp1, Comp2, Comp3, Comp4) durch geeignete Wahl von Widerständen (R2, R3, R4, R5) so festgelegt sind, dass die Mittel zum Wandeln eine für die Position des Slavegeräts in der Reihenschaltung mit gleichartigen Slavegeräten eindeutige, von der Zahl der in der Reihenschaltung nachfolgenden Slavegeräte unabhängige Adresse ausgeben, und wobei in dem Slavegerät Mittel zum Steuern des Slavegeräts bereitgestellt sind, die dazu ausgelegt sind, die so erzeugte digitale Adresse für das Slavegerät zu verwenden.

2. Slavegerät nach Anspruch 1, bei dem das Potential (Ani) am Potentialeingang (E1, E2, E3, E4) abgegriffen wird.

3. Slavegerät nach Anspruch 2, bei dem der Potentialausgang (A1, A2, A3, A4) in dem Slavegerät über einen Widerstand (R1') mit Masse (GND) verbunden ist.

4. Slavegerät nach einem der vorhergehenden Ansprüche, mit zumindest einem Pin, der mit den Mitteln zum Steuern verbunden ist, wobei an jedem Pin jeweils ein Bit für die Adresse durch die Mittel zum Steuern abgreifbar ist.

5. Reihenschaltung aus einem Mastergerät mit zumindest einem Slavegerät nach einem der vorhergehenden Ansprüche.

6. Busanordnung, insbesondere KNX-Busanordnung, mit zumindest einer Reihenschaltung nach Anspruch 5, bei der nur das Mastergerät an einen Hauptbus angeschlossen ist und die Reihenschaltung nach Anspruch 5 ein Subbussystem darstellt.

## Claims

1. Slave device for use in a series connection of slave devices originating from a master device, said slave device having a potential input (E1, E2, E3, E4) for receiving a potential (An1, An2, An3, An4) from a device positioned upstream in the series connection and a potential output (A1, A2, A3, A4) for forwarding a potential to a device positioned downstream in the series connection, wherein a resistor (R1) is disposed between potential input (E1, E2, E3, E4) and potential output (A1, A2, A3, A4), wherein the slave device comprises means for converting a potential (Ani) present at the slave device into a digital address,
**characterised in that** the means for converting comprise a plurality of comparators (Comp1, Comp2, Comp3, Comp4) for comparing the potential (Ani) present with a threshold value that is different for each comparator (Comp1, Comp2, Comp3, Comp4),
wherein the threshold values for the comparators (Comp1, Comp2, Comp3, Comp4) are specified by suitable choice of resistors (R2, R3, R4, R5) in such a way that the means for converting output an address which is unique for the position of the slave device in the series connection with slave devices of similar type and is independent of the number of downstream slave devices in the series connection, and wherein means are provided in the slave device for controlling the slave device, which means are configured for using the thus generated digital address for the slave device.

2. Slave device according to claim 1, wherein the potential (Ani) is tapped at the potential input (E1, E2, E3, E4).

3. Slave device according to claim 2, wherein the potential output (A1, A2, A3, A4) in the slave device is connected to ground (GND) via a resistor (R1').

4. Slave device according to one of the preceding claims, having at least one pin which is connected to the means for controlling, wherein in each case one bit for the address can be tapped at each pin by the means for controlling.

5. Series connection consisting of a master device and having at least one slave device according to one of the preceding claims.

6. Bus arrangement, in particular KNX bus arrangement, having at least one series connection according to claim 5, wherein only the master device is connected to a main bus and the series connection according to claim 5 represents a sub-bus system.

## Revendications

1. Appareil esclave destiné à être utilisé dans un montage en série d'appareils esclaves partant d'un appareil maître, avec une entrée de potentiel (E1, E2, E3, E4) apte à recevoir un potentiel (An1, An2, An3, An4) d'un appareil précédent dans le montage en série et une sortie de potentiel (A1, A2, A3, A4) apte à transmettre un potentiel à un appareil suivant dans le montage en série, entre entrée de potentiel (E1, E2, E3, E4) et sortie de potentiel (A1, A2, A3, A4) étant disposée une résistance (R1), l'appareil esclave comprenant des moyens permettant de convertir un potentiel (Ani) appliqué à l'appareil esclave en une adresse numérique,
**caractérisé en ce que** les moyens de conversion comprennent une pluralité de comparateurs (Comp1, Comp2, Comp3, Comp4) permettant de comparer le potentiel appliqué (Ani) avec une valeur seuil différente pour chaque comparateur (Comp1, Comp2, Comp3, Comp4),
les valeurs seuils dans les comparateurs (Comp1, Comp2, Comp3, Comp4), par un choix approprié de résistances (R2, R3, R4, R5), étant définies de telle manière que les moyens de conversion émettent une adresse univoque pour la position de l'appareil esclave dans le montage en série d'appareils esclaves de même nature et indépendante du nombre d'appareils esclaves suivants dans le montage en série, et des moyens de commande de l'appareil esclave étant mis à disposition dans l'appareil esclave, qui sont conçus pour utiliser l'adresse numérique ainsi créée pour l'appareil esclave.

2. Appareil esclave selon la revendication 1, dans lequel le potentiel (Ani) est prélevé sur l'entrée de potentiel (E1, E2, E3, E4).

3. Appareil esclave selon la revendication 2, dans lequel la sortie de potentiel (A1, A2, A3, A4) dans l'appareil esclave est reliée à la masse (GND) par l'intermédiaire d'une résistance (R1').

4. Appareil esclave selon l'une des revendications précédentes, avec au moins une broche reliée aux moyens de commande, sur chaque broche un bit pour l'adresse pouvant être prélevé par les moyens de commande.

5. Montage en série d'un appareil maître avec au moins un appareil esclave selon l'une des revendications précédentes.

6. Agencement de bus, en particulier agencement de bus KNX, avec au moins un montage en série selon la revendication 5, dans lequel seul l'appareil maître est connecté à un bus principal et le montage en série selon la revendication 5 représente un système de sous-bus.
